# EUROPÄISCHE PATENTSCHRIFT

(11) **EP 1 887 669 B1**
(45) Veröffentlichungstag und Bekanntmachung des Hinweises auf die Patenterteilung: **27.06.2012**
(21) Anmeldenummer: 07114242.6
(22) Anmeldetag: 13.08.2007
(51) Int. Cl.: H02G 1/12

(54) **Kabelentmantelungswerkzeug**
Cable stripping tool
Outil à dénuder des câbles

(30) Priorität: 11.08.2006 DE 202006012362 U
(43) Veröffentlichungstag der Anmeldung: 13.02.2008
(73) Patentinhaber: Krampe, Franz, 59387 Ascheberg-Herbern (DE)
(72) Erfinder: Krampe, Franz, 59387 Ascheberg-Herbern (DE)
(74) Vertreter: Tarvenkorn, Oliver

(56) Entgegenhaltungen:
- WO-A1-02/47230

## Beschreibung

Die Erfindung betrifft ein Kabelentmantelungswerkzeug mit wenigstens
- einem Griffkörper, an dessen Spitze ein Kabelschneidmesser angeordnet ist
- einem Kabelhaltebügel, der mit einer Schiebelasche in einer offenen Ausnehmung und/oder in einem geschlossenen Aufnahmekanal in einem Griffkörper gegen die Kraft einer Zugfeder verschiebbar gelagert ist und einen ausgestellten Bügelteil mit einem Klemmabschnitt aufweist, der oberhalb des Kabelschneidmesser angeordnet ist,
   wobei sich die Zugfeder zwischen einem ersten Aufhängepunkt am Kabelhaltebügel und einem Aufhängepunkt am Griffkörper erstreckt.

Ein solches Kabelentmantelungswerkzeug ist aus der DE 166 54 98 bekannt. Ein wesentliches Merkmal ist, dass an der Spitze eines Griffkörpers ein rotierbares Schneidmesser angeordnet ist, das zum Einschneiden eines äußeren Isolierungsmantels eines Kabels dient. Durch eine Rotationsbewegung des Werkzeugs um die Kabelachse wird der äußere Kabelmantel eingeschnitten. Dann kann eine Zugbewegung zum Kabelende durchgeführt werden, wobei die Ausrichtung des Schneidmessers der Bewegung folgt, so dass ein Längsschnitt bis zum Ende bewirkt wird, der das Abstreifen des Mantelendes erleichtert. Zudem ist ein Kabelhaltebügel vorhanden, der durch Federbeaufschlagung an die Spitze des Werkzeugs herangezogen wird. Der Kabelhaltebügel ist oberhalb des Schneidmessers V-förmig gestaltet, so dass ein darin eingelegtes Rundkabel unabhängig von seinem Durchmesser zentriert wird und an die Spitze des Werkzeugs angedrückt wird. Der Vorteil des Zusammenwirkens von Kabelhaltebügel und Schneidmesser besteht darin, dass das Schneidmesser mit einer definierten Schneidtiefe in den Isolierungsmantel eintauchen kann und es somit möglich ist, einen äußeren Isolierungsmantel eines mehrfach isolierten Leiters zu entfernen, ohne die darunter befindlichen Einzelleiter mit ihren jeweiligen Isolierungen zu beschädigen.

Aus der EP 704 951 A2 ist eine weitere Ausführungsform bekannt, die zusätzliche Verbesserungen gegenüber der älteren Variante aufweist, beispielsweise die Möglichkeit der Arretierung des Kabelhaltebügels.

Um auch an schwer zugänglichen Stellen einen Kabelmantel entfernen zu können, an denen ein Rotieren des Werkzeugs um die Kabelachse nicht möglich ist, ist darüber hinaus ein gattungsgemäßes Kabelentmantelungswerkzeug bekannt, das an der Außenseite des V-förmigen Abschnitts des Kabelhaltebügels eine zusätzliche feststehende Hakenmesserklinge für das Arbeiten in engen Ecken aufweist. Die an der Spitze des Werkzeugs befindliche Klinge birgt ein erhebliches Verletzungsrisiko, das durch Aufstecken einer Schutzkappe nur unzureichend vermieden werden kann.

Zudem besteht bei allen bekannten Ausführungsformen der Nachteil, dass eine relativ große Grifflänge benötigt wird. Bei Arbeiten an Abzweigdosen beispielsweise, die dicht unterhalb einer Decke montiert sind, verhindert der lange Griffkörper, dass das Werkzeug eingesetzt werden kann. Die benötigte Länge des Griffkörpers ist auf die Federaufhängung des Kabelhaltebügels zurückzuführen. Der Aufhängepunkt der Zugfeder an einer Schiebelasche des Kabelhaltebügels, also an dem im Griffkörper verschiebbaren Teil des Kabelhaltebügels, muss soweit von der Spitze des Werkzeugs entfernt sein, dass ein Ausschieben des Kabelhaltebügels auf die maximal vorgesehene Weite möglich ist. Damit muss die Griffkörperlänge in jedem Fall der Summe aus Zugfederlänge und vorgesehenem Schiebeweg des Kabelhaltebügels entsprechen. Auch eine gewisse Länge der entspannten Zugfeder muss gegeben sein, um den benötigten Federweg bei einer Federkonstante zu ermöglichen, die ein leichtes Herausschieben und -halten des Kabelhaltebügels über den Daumen erlaubt.

Aus der WO 02/47230 A1 ist ein gattungsgemäßes Kabelentmantelungswerkzeug bekannt, das zwei Zugfedern aufweist, welche das Bügelteil gegenüber dem Griffkörper zurückhalten. Ausreichend entfernt voneinander angeordnete Aufhängepunkt ermöglichen zwar den Einsatz einer relativ langen Feder mit einer ergonomischen Federkonstante. Der Nachteil bei dem bekannten Werkzeug besteht darin, dass die Zugfedern beim Herausschieben des Bügelteils frei liegt, so dass sich der Benutzer daran verletzen kann oder die Federn sich an Gegenständen verhaken und abgerissen werden können.

Aufgabe der Erfindung ist es somit, ein Kabelentmantelungswerkzeug der eingangs genannten Art so zu verbessern, dass eine verkürzte Bauweise des Griffkörpers möglich ist, wobei eine möglich Berührung der Federn vermieden wird.

Diese Aufgabe wird durch ein Kabelentmantelungswerkzeug mit den Merkmalen des Anspruchs 1 gelöst.

Die Ortsangabe "oben" bzw. "vorn" wird nachfolgend für den Bereich des Schneidmessers unterhalb des Klemmbügels verwendet; "unten" bzw. "hinten" bezeichnet entsprechend das abgewandte Ende des Werkzeugs.

Als ein "Aufhängepunkt" werden im Sinne der vorliegenden Erfindung solche Punkte bezeichnet, an denen Kraftangriffspunkte für das Federelement gegeben sind und zwischen denen eine Rückstellkraft der vorgespannten Feder auf den Kabelhaltebügel wirkt, um diesen in die Ausgangsstellung zurückzubewegen. Die Bezeichnung wird somit unabhängig von der Art der technischen Ausführung der Befestigung der Zugfeder verwendet, sei es durch bloßes Auf- bzw. Einhängen in Hakenvorsprünge, durch Einschmelzen oder Einkleben der Federaugen in den Kunststoffkörper, durch Verstiften mit Bolzen und Schrauben oder dergleichen. Ebenso einbegriffen sind Kraftumlenkpunkte, wenn beispielsweise wenigstens ein Federende zunächst über ein Seilstück ausgelenkt wird.

Die Integration der Zugfeder in einen Hohlraum innerhalb der Schiebelasche des Kabelhaltebügels führt zu mehreren Vorteilen. Die verdeckte Anordnung der Zugfeder im Hohlkörper stellt sicher, dass der aus dem Griffkörper austretende Teil der Schiebelasche berührt werden kann, ohne dass sich der Benutzer an der Feder verletzen kann.

Die Ausbildung der Schiebelasche mit einem Hohlkörper führt außerdem zu einer Profilerhöhung und damit zu einer Aussteifung der Schiebelasche, so dass der aus dem Griffkörper heraus geschobene Teil der Schiebelasche wesentlich steifer ist als bei den aus dem Stand der Technik bekannten Schiebelaschen aus flachen Metallblechabschnitten.

Vorzugsweise wird der erste Aufhängepunkt der Zugfeder im vorderen Bereich der Schiebelasche, am Übergang zum Bügelteil, angeordnet und der zweite Aufhängepunkt rückwärtig des Hohlraums des in der Ausgangsstellung befindlichen Kabelhaltebügels im Griffkörper. Durch eine Vorverlegung der Feder um die Länge der Schiebelasche wird eine wesentlich kürzere Ausbildung des Griffkörpers erreicht.

Die gegenüber einem herkömmlichen Kabelentmantelungswerkzeug eingesparte Länge am Griffkörper kann zur Verkürzung des Griffkörpers genutzt werden, um beispielsweise eine bessere Einsatzmöglichkeit an Engstellen zu geben. Wird die Griffkörperlänge hingegen zum Beispiel aus ergonomischen Gründen beibehalten, so kann der gewonnene Bauraum dazu genutzt werden, Zusatzwerkzeuge hinten im Griff zu integrieren. Beispielsweise kann vorgesehen sein, dort ein Zusatzmesserelement anzuordnen, welches vollständig in den Griffkörper zurückgezogen werden kann. Das bei handelsüblichen Kabelentmantelungswerkzeugen am Kabelhaltebügel vorhandene Hakenmesser kann somit am Griffende angeordnet werden. Das vollständig einziehbare Messer stellt dann keine Verletzungsgefahr mehr dar.

Ein geschlossener Profilquerschnitt der Schiebelasche mit der in einem inneren Hohlraum angeordneten Feder führt zu einer hohen Torsionssteifigkeit des ausgeschobenen Teils der Schiebelasche.

Um eine möglichst kurze Bauweise der Schiebelasche zu erreichen, ist es vorteilhaft, beidseits des Hohlkörpers an der Schiebelasche Kanten vorzusehen, die in entsprechenden Nuten des Griffkörpers geführt sind. Damit wird der Kabelhaltebügel an seiner Schiebelasche bis zur Spitze des Griffkörpers formschlüssig geführt und zwar insbesondere auch im Bereich derjenigen Ausnehmung im oberen Teil des Griffkörpers, in die der Bügelteil des Kabelhaltebügels in der Ausgangsstellung einfährt.

Die Zugfeder wird vorzugsweise an einem Hakenvorsprung eingehängt, der am Übergang der Schiebelasche zu dem Bügelteil ausgebildet ist und sich in den Hohlkörper hinein erstreckt. Ein Ringauge der Zugfeder, die von der Rückseite der Schieblasche her eingeführt wird, kann dort eingehakt werden, so dass eine sichere Aufhängung wie auch eine einfache Montage gegeben ist. Das andere Auge der Zugfeder wird an einem festen Aufhängepunkt im Griffkörper festgelegt.

Der Griffkörper ist vorzugsweise wenigstens zweiteilig ausgebildet, um den Kabelhaltebügel mit der Zugfeder leicht in einer ersten Halbschale montieren zu können und dann eine zweite Halbschale aufzusetzen, um den Griffkörper vollständig auszubilden. Soweit Zusatzwerkzeuge vorgesehen sind oder weitere Funktionselemente, beispielsweise solche zur Verstellung des Mantelschneidmessers, ist die Montage durch die halbschalige Ausbildung ebenfalls erleichtert.

Die Länge der Ausnehmung im oberen Teil des Griffkörpers zur Aufnahme des Bügelteils bzw. die Überdeckung der Schiebelasche des Kabelhaltebügels durch den Griffkörper ist vorzugsweise so gewählt, dass das Ende der Zugfeder, welches bei Erreichen des maximalen Ausschiebewegs aus dem Hohlkörper herausragt, vollständig innerhalb des Griffkörpers liegt. Eine Verletzungsgefahr wird dadurch vermieden.

Anschlagelemente sollten vorgesehen sein, um den maximalen Ausschiebeweg eindeutig zu begrenzen. Damit wird auch verhindert, dass das untere Ende der Schiebelasche in die Ausnehmung am Griffkörper tritt, da hierdurch ein Spalt gebildet werden würde, an dem eine Klemmgefahr gegeben wäre.

Der maximale Ausschiebeweg kann auch dadurch begrenzt werden, dass die seitlichen Führungskanten und die zugehörigen Nuten leicht konvex ausgebildet sind, so dass bei Erreichen des maximalen Ausschiebewegs eine leichte Verklemmung bewirkt wird.

Die Erfindung wird mit weiteren vorteilhaften Ausgestaltungen nachfolgend mit Bezug auf die in den Zeichnungen dargestellten Ausführungsbeispiele näher erläutert.

Die Figuren zeigen im Einzelnen:
- Fig. 1: eine erste Ausführungsform eines Kabelentmantelungswerkzeugs in einem Schnitt durch den Griffkörper;
- Fig. 2: eine zweite Ausführungsform eines Kabelentmantelungswerkzeugs in einem Schnitt durch den Griffkörper;
- Fig. 3a, 3b: Querschnitte verschiedener Schiebelaschen ;
- Fig. 4: eine Schiebelasche in Draufsicht; und
- Fig. 5a, 5b: eine Messereinheit mit einer Zusatzmesserklinge in unterschiedlichen Stellungen in einem Schnitt durch den Griffkörper.

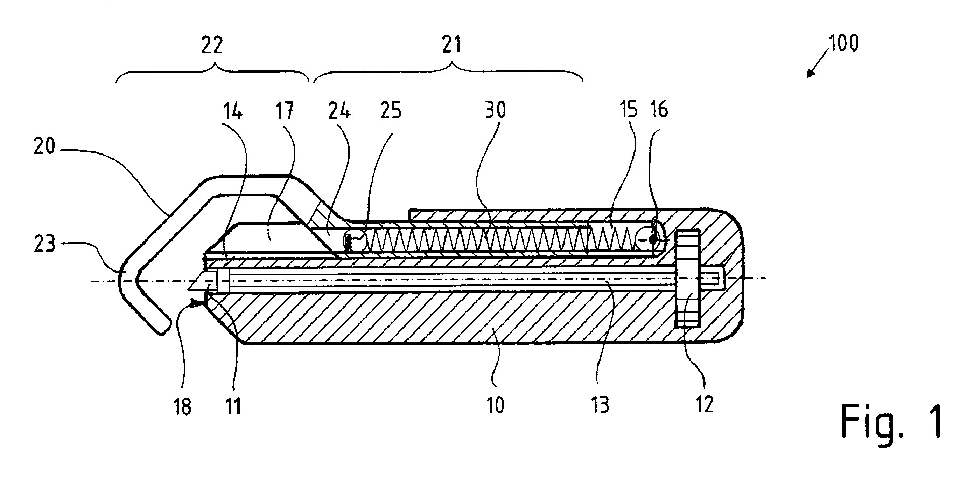

Fig. 1 zeigt ein Kabelentmantelungswerkzeug 100, das im Wesentlichen aus einem Griffkörper 10 und einem darin verschiebbar geführten Kabelhaltebügel 20 besteht. Dazwischen wirkt eine Zugfeder 30.

In dem Griffkörper 10 ist in an sich bekannter Weise eine Rändelschraube 12 gelagert, die an einer Durchbrechung seitlich am Griffkörper austritt und dort verdreht werden kann. Die Rändelschraube 12 ist mit einer zentralen Gewindebohrung versehen, in der eine Gewindestange 13 geführt ist, an deren Ende wiederum ein Mantelschneidmesser 11 befestigt ist. Das Mantelschneidmesser 11 ist an der Spitze 18 des Griffkörpers 10 drehbar gelagert, so dass es sich stets parallel zur Bewegungsrichtung des Werkzeugs ausrichtet, also sowohl umfängliche Schnitte am Kabelmantel erlaubt wie auch Längsschnitte. Die Länge des aus der Spitze 18 des Griffkörpers 10 heraustretenden Teils des Mantelschneidmessers 11 wird mittels der Rändelschraube 12 und der Gewindestange 13 bewirkt.

Erfindungswesentlich ist die Ausbildung des Kabelhaltebügels 20, der mit seiner Schiebelasche 21 verschiebbar im Griffkörper 10 geführt ist. An die Schiebelasche 21 schließt sich ein Bügelteil 22 an, der in einem V-förmigen Klemmteil 23 gegenüber dem Mantelschneidmesser ausläuft. Ein eingelegtes Kabelstück wird somit über den Klemmteil 23 auf das Mantelschneidmesser 11 gedrückt.

Erfindungsgemäß ist die Zugfeder 30 an einem ersten Aufhängepunkt 16 am Griffkörper 10 befestigt und läuft dann bis in einen Hohlraum 24 des Kabelhaltebügels 20 hinein, wo ein zweiter Aufhängepunkt 25 vorgesehen ist.

Fig. 1 zeigt einen Zustand, in dem der Kabelhaltebügel 20 gegenüber dem Griffkörper 10 vorgeschoben ist. Der rechte Teil der Zugfeder 30 ist innerhalb des Aufnahmekanals 15 im Griffstück 10 geführt. Der andere Teil der Zugfeder 30 ist innerhalb des Hohlraums 24 in der Schiebelasche 21 des Kabelhaltebügels 20 geführt und liegt also insbesondere auch noch im Bereich einer Ausnehmung 17 im Griffkörper 10, an welcher der Kabelhaltebügel 20 schon aus dem Griffkörper 10 heraustritt, nicht offen. Durch die verdeckte Führung der Feder 30 innerhalb des aus dem Griffkörper 10 ausschiebbaren Teils des Kabelhaltebügels 20 steht eine ausreichend lange Strecke zur Verfügung, um die Zugfeder 30 vorzuspannen, so dass diese mit einer entsprechend kleinen Federrate gewählt werden kann, was eine erleichterte Bedienung beim Ausschieben des Kabelhaltebügels 20 ermöglicht.

Die Zugfeder 30 ist also gemäß der Erfindung innerhalb einer solchen Länge des Griffkörpers 10 untergebracht, welche ohnehin erforderlich ist, um das Kabelentmantelungswerkzeug 100 mit der Hand bequem greifen zu können.

Im Bereich der Ausnehmung 17 und des Aufnahmekanals 15 im Griffkörper 10 sind für die Schiebelasche 21 beidseitig Nuten 14 eingebracht, die eine Schienenführung der Schiebelasche 21 ermöglichen.

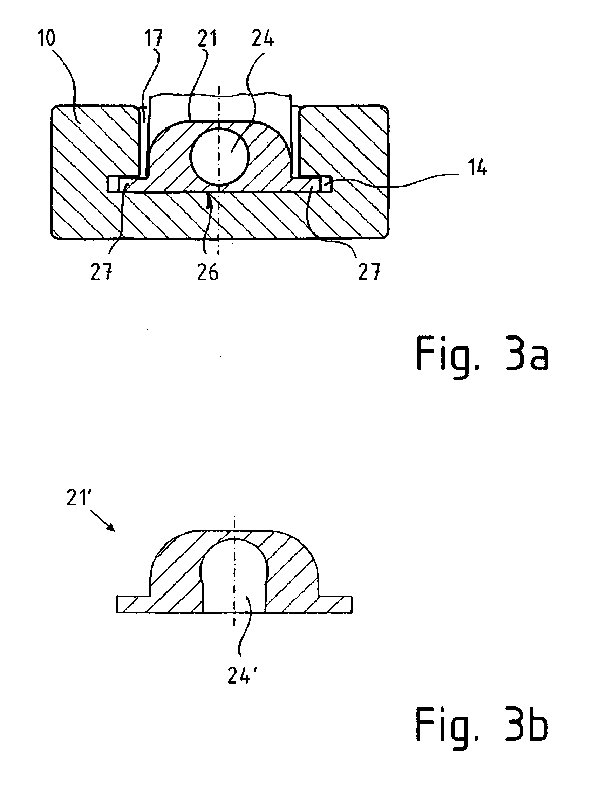

Fig. 3a zeigt den Kabelhaltebügel 20 gemäß einer ersten Ausführungsform im Bereich der Schiebelasche 21. Der Querschnitt umfasst einen ovalen Hohlkörper mit einer zentralen Bohrung 24 für die Aufnahme der Zugfeder 30. An den Hohlkörper schließt sich seitlich jeweils eine vorspringende Kante 27 an, durch welche eine Führung innerhalb der Nut 14 im Griffkörper 10 möglich ist. Die Unterseite 26 der Schiebelasche 21 ist plan ausgebildet, um eine Gleitfläche auszubilden.

Fig. 3b zeigte eine alternative Ausführungsform einer Schiebelasche 21' eines Kabelhaltebügels, bei der sich eine zentrale Ausnehmung 24' bis zur Gleitfläche an der Unterseite 26' hin öffnet, die Schiebelasche also ein einseitig offenes Profil ausbildet.

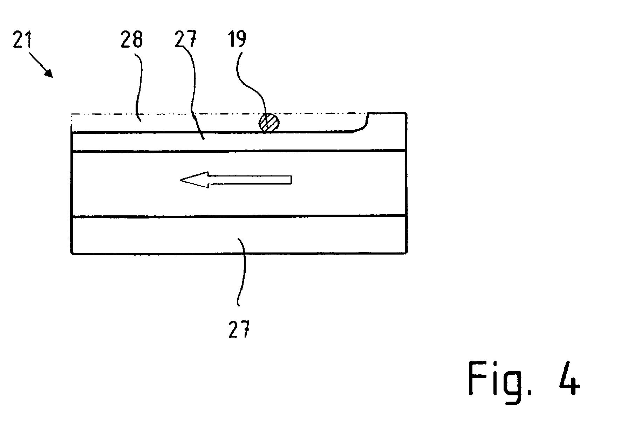

Fig. 4 zeigt eine Draufsicht auf den Kabelhaltebügel 20, der an einer seiner Kanten 27 mit einem Rücksprung 28 versehen ist. Ein im Gehäuse angeordneter Stift 19 ragt in die Nut 14 des Gehäusekörpers, in der die Kante 27 geführt ist, und in den Bereich des Rücksprungs 28. Ein Vorschub des Kabelhaltebügels in Pfeilrichtung ist damit nur solange möglich, bis der Stift am Ende des Rücksprungs 28 an die Kante 27 anschlägt. Ein unbeabsichtigtes Herausziehen des Kabelhaltebügels 20 aus dem Griffkörper 10 wird somit vermieden.

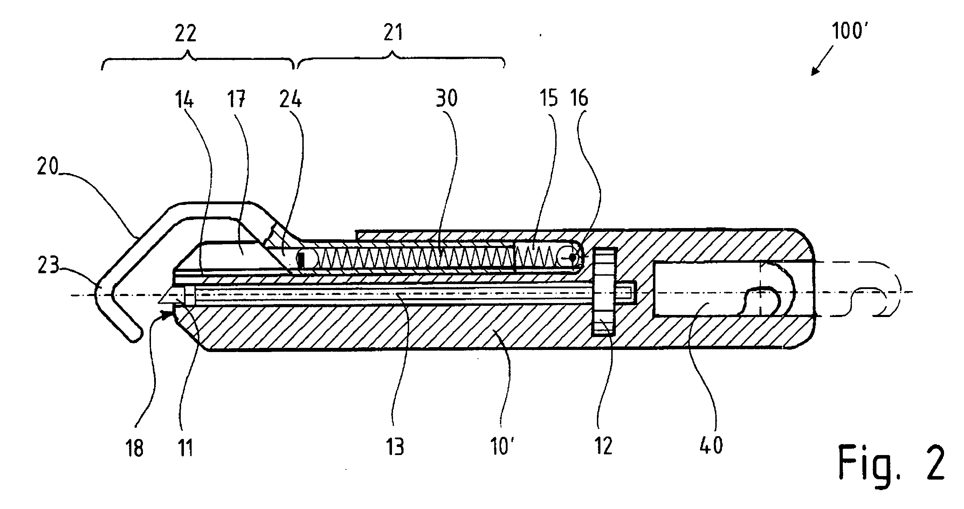

Fig. 2 zeigt eine weitere Ausführungsform eines Kabelentmantelungswerkzeugs 100', dessen Griffkörper 10' über den für die Verstellung des Schneidmessers 11 und die automatische Rückholung des ausgeschobenen Kabelhaltebügels 20 unbedingt notwendigen Bauraums hinaus verlängert ist.

Im unteren Verlängerungsteil des so verlängerten Griffstücks 10' ist eine Messereinheit 40 mit einer ausschiebbaren Zusatzmesserklinge 41 angeordnet, die in Figur 2 beispielsweise als Hakenklinge ausgebildet ist.

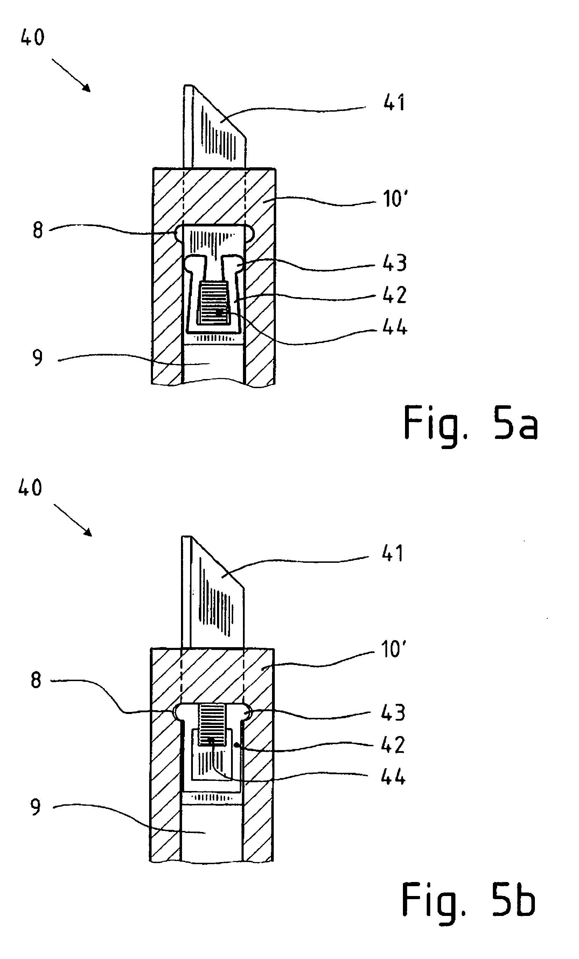

Die Messereinheit 40 wird unter Bezug auf die Figuren 5a und 5b näher erläutert:

Fig. 5a zeigt den Zustand während des Ausschiebens einer Zusatzmesserklinge 41 aus dem Griffkörper 10' in einem Schnitt auf etwa halber Höhe des Griffkörpers.

Im Inneren des Griffkörpers 10' ist eine Nut 9 vorgesehen, innerhalb der die Zusatzmesserklinge 41 einschließlich der Verriegelungselemente 42, 43, 44 verschiebbar angeordnet ist. Die Nut 9, die sich zur Außenseite des Griffkörpers 10' hin öffnet, damit eine Bedienung der Messereinheit über ein Schieberelement 43 möglich ist, endet kurz vor dem hinteren Ende des Griffkörpers 10', wo sie sich lediglich in einer schlitzförmigen Durchführung fortsetzt, welche dem Querschnitt der Zusatzmesserklinge 41 entspricht und damit eine Führung derselben bewirkt. Am Ende der Nut 9 weisen deren seitliche Flanken beidseitig Rücksprünge 8 auf.

Ein bügelförmiges Verrastungselement 42 ist mit der Zusatzmesserklinge 41 fest verbunden. Es besitzt an der Außenseite seiner federbaren Schenkel jeweils einen gerundeten Vorsprüng 43 und an der Innenseite einen eckigen Vorsprung. In dem Verrastungselement 42 ist das Schieberelement 43 geführt und gegen Herausfallen aus der Nut 9 gesichert.

Wird die Zusatzmesserklinge 41 aus der Nut 9 heraus geschoben, wie in Fig. 5a gezeigt, so liegt das Schieberelement 43 zwischen den Schenkeln des Bügelelements 42, und zwar mit seiner Vorderkante vor den inneren, eckigen Vorsprüngen, so dass verhindert wird, dass das Schieberelement 43 zwischen den Bereich der Vorsprünge 43 gerät und die Schenkel zu weit aufspreizt, was zu einer Verklemmung innerhalb der Nut 9 führen könnte.

Wird die Endposition gemäß Fig. 5b erreicht, so federn die gerundeten Vorsprünge 43 in die Rücksprünge 8 der Seitenflanken der Nut 9 ein, wodurch sich die lichte Weite zwischen den Schenkeln des Bügelelements 42 so weit vergrößert, dass es möglich ist, das Schieberelement 43 zwischen die Endbereiche der Schenkel zu schieben und damit die Zusatzmesserklinge 41 im Griffkörper 10' formschlüssig festzulegen.

Zum Zurückziehen der Zusatzmesserklinge 41 wird das Schieberelement 43 zurückgezogen, so dass es die federnden Schenkel des Bügelelements 42 freigibt. Über einen Mittelsteg des Bügelelements 42 kann vom Schieberelement 42 aus eine Kraft in Richtung der Längserstreckung der Nut 9 ausgeübt werden, wodurch die Vorsprünge 43 infolge ihrer Rundung aus den Rücksprüngen 8 bewegt werden, so dass wieder die Konfiguration gemäß Fig. 5a erreicht und die Messereinheit 40 für eine axiale Verschiebung freigeben wird.

## Patentansprüche

1. Kabelentmantelungswerkzeug (100, 100') mit wenigstens
- einem Griffkörper (10, 10'), an dessen Spitze ein Kabelschneidmesser (11) angeordnet ist,
- einem Kabelhaltebügel (20), der mit einer Schiebelasche (21; 21') in einer offenen Ausnehmung (17) und/oder in einem geschlossenen Aufnahmekanal (15) in einem Griffkörper (10, 10') gegen die Kraft einer Zugfeder (30) verschiebbar gelagert ist und einen ausgestellten Bügelteil (22) mit einem Klemmabschnitt (23) aufweist, der oberhalb des Kabelschneidmesser (11) angeordnet ist,
wobei sich die Zugfeder (30) zwischen einem ersten Aufhängepunkt (25) am Kabelhaltebügel (20) und einem Aufhängepunkt (16) am Griffkörper (10, 10') erstreckt,
**dadurch gekennzeichnet, dass** die Schiebelasche (21; 21') des Kabelhaltebügels (20) wenigstens teilweise als ein Hohlkörper mit einem Hohlraum (24) ausgebildet ist, in dem die Zugfeder (30) angeordnet ist.

2. Kabelentmantelungswerkzeug (100; 100') nach Anspruch 1, **dadurch gekennzeichnet, dass** der erste Aufhängepunkt (25) der Zugfeder (30) im vorderen Bereich der Schiebelasche (21; 21') angeordnet ist und der zweite Aufhängepunkt (16) rückwärtig des Hohlraums (24) des in der Ausgangsstellung befindlichen Kabelhaltebügels (20) im Griffkörper (16) angeordnet ist.

3. Kabelentmantelungswerkzeug (100; 100') nach Anspruch 1 oder 2, **dadurch gekennzeichnet, dass** die Schiebelasche (21; 21') eine Bohrung als Hohlraum (24) aufweist.

4. Kabelentmantelungswerkzeug (100; 100') nach Anspruch 1 oder 2, **dadurch gekennzeichnet, dass** die Schiebelasche (21') als ein einseitig offenes Profil ausgebildet ist, das einen Hohlraum (24') umschließt.

5. Kabelentmantelungswerkzeug (100; 100') nach einem der Ansprüche 1 bis 4, **dadurch gekennzeichnet, dass** die Schiebelasche (21; 21') beidseits des Hohlraums (24) sich in Schiebrichtung erstreckende Kanten (27) aufweist, die in Nuten (14) des Griffkörpers (10, 10') geführt sind.

6. Kabelentmantelungswerkzeug (100; 100') nach Anspruch 5, **dadurch gekennzeichnet, dass** ein Stiftelement (19) oder ein Vorsprung aus dem Griffkörper (10, 10') in die Nut (14) ragt und an wenigstens einer Kante (27) ein Rücksprung (28) ausgebildet ist, innerhalb dessen das Stiftelement (1) oder der Vorsprung innerhalb des Verschiebewegs geführt ist.

7. Kabelentmantelungswerkzeug (100; 100') nach einem der Ansprüche 1 bis 6, **dadurch gekennzeichnet, dass** am Übergang der Schiebelasche (21, 21') zu dem Bügelteil (22) ein sich in den Hohlraum (24) erstreckender Hakenvorsprung (25) ausgebildet ist.

8. Kabelentmantelungswerkzeug (100; 100') nach einem der Ansprüche 1 bis 7, **dadurch gekennzeichnet, dass** der Klemmabschnitt (23) des Bügelteils (22) V-förmig ausgebildet ist, wobei eine Spitze gegenüber dem Kabelschneidmesser (11) angeordnet ist.

9. Kabelentmantelungswerkzeug (100; 100') nach einem der Ansprüche 1 bis 8, **dadurch gekennzeichnet, dass** die Länge der Schiebelasche (21; 21') im Wesentlichen der Länge des maximalen Ausschiebewegs des Kabelhaltebügels (20) entspricht.

10. Kabelentmantelungswerkzeug (100; 100') nach Anspruch 9, **dadurch gekennzeichnet, dass** der Griffkörper (10, 10') zumindest das aus dem Hohlraum (24, 24') ragende freie Ende der Zugfeder (30) bei Erreichen des maximalen Ausschiebewegs überdeckt.

11. Kabelentmantelungswerkzeug (100') nach einem der vorhergehenden Ansprüche, **dadurch gekennzeichnet, dass** unterhalb der Schiebelasche (21; 21') des Kabelhaltebügels (20) eine Messereinheit (40) in den Griffkörper (10') einziehbaren Zusatzmesserklinge (41) angeordnet ist.

12. Kabelentmantelungswerkzeug (100') nach Anspruch 11, **dadurch gekennzeichnet, dass** die Zusatzmesserklinge (41) in einer Nut (9) im Griffkörper (10') geführt ist, in deren Seitenflanken endseitig Rücksprünge (8) eingebracht sind, und dass die Zusatzmesserklinge (41) mit einem U-förmigen Bügelelement (42) verbunden ist, das an seinen Enden jeweils einen nach außen weisenden, gerundeten Vorsprung (43) aufweist, und, dass innerhalb des Bügelelemente (42) ein Schieberelement (43) geführt ist, das zwischen die äußeren Schenkel des Bügelelemente (42) einschiebbar ist.

## Claims

1. A cable-stripping tool (100, 100') with at least
- one gripping member (10, 10') at the tip of which a cable-cutting knife (11) is arranged,
- one cable-holding bracket (20) which is mounted with a sliding fastening (21; 21') in an open recess (17) and/or in a closed receiving duct (15) in a gripping member (10, 10') so as to be displaceable against the force of a tension spring (30) and which has an exposed bracket part (22) with a clamping portion (23) which is situated above the cable-cutting knife (11),
wherein the tension spring (30) extends between a first suspension point (25) on the cable-holding bracket (20) and a suspension point (16) on the gripping member (10, 10'),
**characterized in that** the sliding fastening (21; 21') of the cable-holding bracket (20) is designed at least in part in the form of a hollow body with a cavity (24) in which the tension spring (30) is arranged.

2. A cable-stripping tool (100; 100') according to claim 1, **characterized in that** the first suspension point (25) of the tension spring (30) is situated in the front region of the sliding fastening (21; 21') and the second suspension point (16) is situated in the gripping member (16) at the rear of the cavity (24) of the cable-holding bracket (20) present in the starting position.

3. A cable-stripping tool (100; 100') according to claim 1 or 2, **characterized in that** the sliding fastening (21; 21') has a bore as the cavity (24).

4. A cable-stripping tool (100; 100') according to claim 1 or 2, **characterized in that** the sliding fastening (21; 21') is designed in the form of a profile which is open on one side and which surrounds a cavity (24').

5. A cable-stripping tool (100; 100') according to any one of claims 1 to 4, **characterized in that** the sliding fastening (21; 21') has edges (27) which extend on both sides of the cavity (24) in the displacement direction and which are guided in grooves (14) in the gripping member (10, 10').

6. A cable-stripping tool (100; 100') according to claim 5, **characterized in that** a pin element (19) or a projection protrudes out of the gripping member (10, 10') into the groove (14), and a setback (28), inside which the pin element (1) or the projection is guided inside the displacement path, is formed on at least one edge (27).

7. A cable-stripping tool (100; 100') according to any one of claims 1 to 6, **characterized in that** a hook projection (25) extending in the cavity (24) is formed at the transition of the sliding fastening (21, 21') to the bracket part (22).

8. A cable-stripping tool (100; 100') according to any one of claims 1 to 7, **characterized in that** the clamping portion (23) of the bracket part (22) is made V-shaped, wherein a tip is situated opposite the cable-cutting knife (11).

9. A cable-stripping tool (100; 100') according to any one of claims 1 to 8, **characterized in that** the length of the sliding fastening (21; 21') corresponds substantially to the length of the maximum extension path of the cable-holding bracket (20).

10. A cable-stripping tool (100; 100') according to claim 9, **characterized in that** when the maximum extension path is reached the gripping member (10, 10') covers at least the free end of the tension spring (30) projecting out of the cavity (24, 24').

11. A cable-stripping tool (100') according to any one of the preceding claims, **characterized in that** a knife unit (40) with an additional knife blade (41) capable of being withdrawn into the gripping member (10') is arranged below the sliding fastening (21; 21') of the cable-holding bracket (20).

12. A cable-stripping tool (100') according to claim 11, **characterized in that** the additional knife blade (41) is guided in a groove (9) in the gripping member (10'), in the lateral flanks of which groove (9) setbacks (8) are formed at the end, and the additional knife blade (41) is connected to a U-shaped bracket element (42), the ends of which have in each case an outwardly directed rounded projection (43), and a slide element (43) which is capable of being inserted between the outer arms of the bracket elements (42) is guided inside the bracket elements (42).

## Revendications

1. Outil à dénuder des câbles (100, 100') avec au moins
- un corps de préhension (10, 10'), sur la pointe duquel un couteau pour câble (11) est disposé,
- un étrier de retenue de câble (20), qui est logé de manière coulissante avec une languette coulissante (21 ; 21') dans un évidement ouvert (17) et/ou dans un canal de réception (15) fermé dans un corps de préhension (10, 10') contre la force d'un ressort de pression (30) et présente une partie d'étrier (22) en projection avec une section de serrage (23) qui est disposée au-dessus du couteau pour câble (11),
sachant que le ressort de pression (30) s'étend entre un premier point de suspension (25) sur l'étrier de retenue de câble (20) et un point de suspension (16) sur le corps de préhension (10, 10'),
**caractérisé en ce que** la languette coulissante (21 ; 21') de l'étrier de retenue de câble (20) est réalisée au moins en partie comme un corps creux avec un espace creux (24), dans lequel le ressort de pression (30) est disposé.

2. Outil à dénuder des câbles (100 ; 100') selon la revendication 1, **caractérisé en ce que** le premier point de suspension (25) du ressort de pression (30) est disposé dans la zone avant de la languette coulissante (21 ; 21') et le second point de suspension (16) est disposé côté arrière de l'espace creux (24) de l'étrier de retenue de câble (20) se trouvant dans la position de départ dans le corps de préhension (16).

3. Outil à dénuder des câbles (100 ; 100') selon la revendication 1 ou 2, **caractérisé en ce que** la languette coulissante (21 ; 21') présente un perçage en guise d'espace creux (24).

4. Outil à dénuder des câbles (100 ; 100') selon la revendication 1 ou 2, **caractérisé en ce que** la languette coulissante (21') est réalisée comme un profilé ouvert d'un côté qui entoure un espace creux (24').

5. Outil à dénuder des câbles (100 ; 100') selon l'une quelconque des revendications 1 à 4, **caractérisé en ce que** la languette coulissante (21 ; 21') présente des arêtes (27) s'étendant dans le sens de coulissement des deux côtés de l'espace creux (24), lesquelles sont guidées dans des rainures (14) du corps de préhension (10, 10').

6. Outil à dénuder des câbles (100 ; 100') selon la revendication 5, **caractérisé en ce qu'**un élément de goupille (19) ou une saillie dépasse du corps de préhension (10, 10') dans la rainure (14) et un épaulement (28) est réalisé sur au moins une arête (27), à l'intérieur duquel l'élément de goupille (1) ou la saillie est guidée dans la course coulissante.

7. Outil à dénuder des câbles (100 ; 100') selon l'une quelconque des revendications 1 à 6, **caractérisé en ce qu'**une saillie en forme de crochet (25) s'étendant dans l'espace creux (24) est réalisée sur la transition de la languette coulissante (21, 21') à la partie d'étrier (22).

8. Outil à dénuder des câbles (100 ; 100') selon l'une quelconque des revendications 1 à 7, **caractérisé en ce que** la section de serrage (23) de la partie d'étrier (22) est réalisée en forme de V, sachant qu'une pointe est disposée en face du couteau pour câble (11).

9. Outil à dénuder des câbles (100 ; 100') selon l'une quelconque des revendications 1 à 8, **caractérisé en ce que** la longueur de la languette coulissante (21 ; 21') correspond sensiblement à la longueur de la course de sortie maximale de l'étrier de retenue de câble (20).

10. Outil à dénuder des câbles (100 ; 100') selon la revendication 9, **caractérisé en ce que** le corps de préhension (10, 10') recouvre au moins l'extrémité libre dépassant de l'espace creux (24, 24') du ressort de pression (30) lors de l'atteinte de la course de sortie maximale.

11. Outil à dénuder des câbles (100') selon l'une quelconque des revendications précédentes, **caractérisées en ce qu'**une unité de couteau (40) composée d'une lame de couteau supplémentaire (41) rétractable dans le corps de préhension (10') est disposée au-dessous de la languette coulissante (21 ; 21') de l'étrier de retenue de câble (20).

12. Outil à dénuder des câbles (100') selon la revendication 11, **caractérisé en ce que** la lame de couteau supplémentaire (41) est guidée dans une rainure (9) dans le corps de préhension (10'), dans les flancs latéraux de laquelle sont introduits des épaulements (8) côté extrémité, et **en ce que** la lame de couteau supplémentaire (41) est reliée à un élément d'étrier en forme de U (42) qui présente sur ses extrémités respectivement une saillie (43) arrondie, tournée vers l'extérieur, et **en ce qu'**un élément à coulisse (43) qui peut être inséré entre les branches extérieures de l'élément étrier (42), est guidé dans l'élément d'étrier (42).
